# EUROPÄISCHE PATENTSCHRIFT

(11) **EP 2 386 506 B1**
(45) Veröffentlichungstag und Bekanntmachung des Hinweises auf die Patenterteilung: **30.01.2013**
(21) Anmeldenummer: 11165268.1
(22) Anmeldetag: 09.05.2011
(51) Int. Cl.: B65G 67/20

(54) **Logistiksystem mit Gleitplattenquerantrieb**
Logistics system with sliding panel transverse drive
Système logistique avec un entraînement de plaques qui glissent latéralement

(30) Priorität: 10.05.2010 DE 102010028820
(43) Veröffentlichungstag der Anmeldung: 16.11.2011
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ, Speiser & Partner

(56) Entgegenhaltungen:
- EP-A2- 2 151 402
- WO-A1-01/21514
- WO-A1-98/36999
- WO-A1-2010/002248
- DE-A1- 2 431 542
- GB-A- 779 090
- US-B1- 7 695 235

## Beschreibung

Die Erfindung betrifft ein Logistiksystem sowie einzelne Teile davon, die zusammen das gesamte System bilden können. Die Erfindung betrifft auch eine Übergabestation für ein Logistiksystem und Verfahren zum Ent-/Beladen von Fahrzeugen.

Bei bereits vorhandenen Lagern oder Kommissionierungseinheiten gibt es eine Vielzahl von Andockstationen (auch als Hallentore bezeichnet), an die die Lkws jeweils mit ihrer Rückseite heranfahren können, um Güter zu übernehmen oder zu übergeben. Solche Güterlager oder Kommissionierungseinheiten bestehen in einer großen Vielzahl und oft kann es vorkommen, dass eine Vielzahl von Fahrzeugen gleichzeitig an die Andockstationen, die jeweils in einer Gebäudewand miteinander fluchtend nebeneinanderliegen, heranfahren müssen. So können ebenso viele Lkws andocken, wie entsprechende Andockstationen, also Gebäudewandöffnungen/Hallentore, vorhanden sind. Dabei sind diese Andockstationen meist auf der Höhe der Ladeflächen der Lkws angeordnet, damit der Lagerboden und die Ladefläche des Lkws eine Ebene bilden und der Lkw z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpalletten transportieren kann, ist die Art des Be- und Entladens sehr zeitintensiv. Auch kann der zu be- und entladende Lkw während der gesamten Zeit des Be- und Entladens nicht von der Andockstation wegbewegt werden.

Bei dem gattungsgemäßen Logistiksystem und bei der gattungsgemäßen Übergabestation der Druckschrift EP 1 808 387 A2 wird die zu be- und entladende Fracht auf einer Güterplattformen, auch als Plattformen oder Ladungsträger bezeichnet, gelagert und die gesamte Plattform mitsamt der Fracht wird vom Lkw bzw. auf den Lkw in einem Arbeitsvorgang verfrachtet. D.h. die gesamte Plattform mit den Gütern ist in einem Schritt an ein Fahrzeug übergebbar oder kann in einem Schritt von einem Fahrzeug übernommen werden.

In den entsprechenden Lager- und Kommissionierungsbereichen des Logistiksystems gemäß der vorgenannten Druckschrift werden also entweder die Plattformen gelagert, sei es bereits mit Gütern beladen oder auch unbeladen, oder die einzelnen Plattformen werden dort mit entsprechenden Gütern kommissioniert oder beladen, um dann in die Logistikkette übergeben werden zu können, was nichts anderes bedeutet, als dass Fahrzeuge, z.B. Lkws oder auch Züge, die Plattformen übernehmen und an den nächsten gewünschten Zielort verfrachten.

In dem System nach der EP 1 808 387 A2 wird ein eigenständiges Gebäude benötigt, um die Plattformen an die Fahrzeuge zu übergeben oder von dort zu übernehmen. Die dort offenbarte Übergabestation ist derart verschwenkbar, dass sie sich auf die Ladefläche eines Fahrzeugs hin ausrichten kann.

Das Logistiksystem des Dokuments EP 1 808 387 A2 hat sich bereits bewährt, ist aber aus bautechnischen Gründen nicht überall umsetzbar. Dies gilt vor allem dann, wenn das dort beschriebene Logistiksystem an bereits bestehende Lager und Kommissionierungsbereiche angepasst werden soll und bzw. oder eine einfache und kostengünstige Lösung erforderlich ist. Des Weiteren sind die für die Palettenausrichtung vorgeschlagenen Querfahrantriebe störend, da sie den Be- bzw. Entladevorgang der Paletten behindern können.

Das Dokument EP 2 151 402 A2 offenbart ein Logistiksystem mit denselben Nachteilen.

Die Aufgabe der vorliegenden Erfindung besteht darin, das Logistiksystem des Dokuments EP 1 808 387 A2 auf einfache und kostengünstige Art und Weise so weiterzuentwickeln, dass es mit bereits bestehenden Güterlägern oder Güterkommissionierungseinrichtungen bei geringem baulichen Aufwand kombinierbar ist und ein vereinfachtes Be- und Entladen der Paletten ermöglicht.

Die Aufgabe wird gelöst durch ein Logistiksystem mit den Merkmalen des Anspruchs 1, eine Übergabestation mit den Merkmalen des Anspruchs 7 und durch ein Belade- bzw. Entladeverfahren mit den Merkmalen der Ansprüche 8 bzw. 9. Vorteilhafte Weiterbildungen sind in den Unteransprüchen, besonders aber auch in den Zeichnungen und in der nachfolgenden Beschreibung dargestellt.

Es ist vorgesehen, das Logistiksystem des Dokuments EP 1 808 387 A2 so weiterzubilden, dass in dem Lagergebäude, in dem entweder die Waren oder Plattformen gelagert oder kommissioniert werden, eine oder mehrere Übergabestationen eingerichtet werden, durch die jeweils mehrere zwei Plattformen (beladen oder unbeladen) von einem Lkw aufgenommen und/oder mehrere zwei Plattformen an einen Lkw abgegeben werden können. Dabei bildet der Boden des Lagergebäudes eine Ebene mit den zu ent- und beladenden Lkws, die jeweils vor einer entsprechenden Andockstation vor dem Lagergebäude zu positionieren sind.

Somit ist es gegenüber dem Logistiksystem des Dokuments EP 1 808 387 A2 nicht erforderlich, aufwendige bauliche Veränderungen zur Aufnahme mehrerer Plattformen in einem eigenen Lager vorzunehmen, sondern es kann ein vorhandenes Lagergebäude durch die einfache Montage des erfindungsgemäßen Logistiksystems auf dem Boden des Lagergebäudes umgerüstet werden. Dabei sind nur geringe Montagearbeiten vorzunehmen, was den Aufwand und die Kosten nach Arbeitszeit und Material gering hält im Vergleich zum Aufbau eines separaten mehrstöckigen Lagers mit entsprechenden Förderungseinrichtungen. Ferner kommt das erfindungsgemäße Logistiksystem mit einfachen und wenigen mechanischen Führungselementen, Antrieben, Sensoren und Steuerungselementen aus, wodurch die Kosten der Anlage gering gehalten werden.

Dennoch bietet das erfindungsgemäße Logistiksystem die Vorteile des Logistiksystem des Dokuments EP 1 808 387 A2, da es ebenfalls bei dem Be- und Entladen von Lkws mittels des erfindungsgemäßen Logistiksystems nicht mehr erforderlich ist, dass ein Lkw mittels z.B. eines oder mehrerer Gabelstapler be- und/oder entladen wird, sondern das Be- und/oder Entladen der Lkw mittels Plattformen in jeweils einem einzigen Arbeitsschritt vorgenommen werden kann, wodurch die Be- und Entladezeiten deutlich gesenkt und hierdurch Zeit und Kosten eingespart werden können. Dabei werden die zu beladenden Plattformen im Lagergebäude unabhängig von der Präsenz des entsprechenden Lkws beladen, so dass eine oder mehrere beladene Plattformen an der Übergabestation bereitstehen können, wenn der zu beladende Lkw das Lager erreicht und vor der entsprechenden Andockstation anhält. Die bereits beladene Plattform kann in nur einem Arbeitsschritt an den Lkw abgegeben werden. Auch können beladene Plattformen aus einem anliefernden Lkw durch die Übergabestation in einem einzigen Arbeitsschritt aufgenommen werden, so dass die Plattform an der Übergabestation entladen werden kann, nachdem der Lkw die entsprechende Andockstation bereits wieder verlassen hat.

Dabei zeichnet sich die Übergabestation des erfindungsgemäßen Logistiksystems dadurch aus, dass die Übergabestation eine Aufnahme aufweist, die mehrere Plattformen aufnehmen kann. Dabei kann jede der Plattformen von einer Aufnahme der Übergabestation zum Lkw bzw. vom Lkw zu der Aufnahme der Übergabestation durch eine oder mehrere in Beförderungsrichtung der Plattform wirkende Vorschubeinheiten bewegt werden. Ferner kann die Aufnahme quer zur Beförderungsrichtung der Plattform über eine in Querrichtung wirkende Vorschubeinheit (Ausrichteinheit 80) verfahren werden.

Hierdurch kann die Aufnahme der Übergabestation eine erste Plattform von einem Lkw aufnehmen, die Übergabestation kann dann quer zur Beförderungsrichtung verfahren und eine zweite Plattform in den Lkw abgeben. Daher kann das Ent- und erneute Beladen eines Lkws in lediglich zwei Arbeitsschritten und damit deutlich schneller als mit herkömmlichen Transportvorrichtungen wie Gabelstaplern durchgeführt werden.

Ebenso kann die Aufnahme z.B. zwei Plattformen aufnehmen, die eine Plattform an einen ersten Lkw abgeben, dann seitlich verfahren und die zweite Palette an einen zweiten Lkw abgeben. Auch kann eine leere Aufnahme zuerst eine Plattform aus einem ersten Lkw aufnehmen, dann seitlich verfahren und dann eine weitere Plattform aus einem zweiten Lkw aufnehmen. So können zwei Lkw in lediglich zwei Arbeitsschritten zügig be- oder entladen werden. Dabei ist es jeweils unerheblich, ob es sich um beladene oder unbeladene Plattformen handelt. Das Ent- und Beladen der entsprechenden Plattformen mit Fracht kann jeweils vor Ankunft bzw. nach Abfahrt der Lkw erfolgen, d.h. die Lkw müssen während des Ent- und Beladens der Ladungsträger 50 nicht vor der Andockstation stehen bleiben.

Gemäß einem weiteren Aspekt des erfindungsgemäßen Logistiksystems besteht die quer zur Beförderungsrichtung wirkende Vorschubeinheit aus einer Gleitplatte mit Seilantrieb, wobei Antriebsseile an gegenüberliegenden Seiten in Beförderungsrichtung vorgesehen sind. Hierdurch kann auf störende Querantriebsmotoren im Bereich der zu bewegenden Aufnahme verzichtet und eine gleichmäßige Antriebskraft auf die zu bewegende Aufnahme ausgeübt werden. Ferner können die Antriebsseile flach am Boden verlegt werden und stören den Be- bzw. Entladevorgang der auf der Aufnahme befindlichen Plattformen nicht.

Gemäß einem weiteren Aspekt des erfindungsgemäßen Logistiksystems ist die Übergabestation als Teil einer Verladerampe ausgebildet. Hierdurch können die Elemente der Übergabestation auf dem Boden des Lagergebäudes einfach montiert werden und es sind keine aufwendigen und kostspieligen Baumaßnahmen zur Umsetzung des erfindungsgemäßen Logistiksystems erforderlich. Die feste Montage ist einfache und günstig.

Gemäß einem weiteren Aspekt des erfindungsgemäßen Logistiksystems ist die Aufnahme mittels des Seilantriebs in der Richtung quer zur Beförderungsrichtung verfahrbar und die Verfahrbewegung wird durch die Gleitplatte durchgeführt. Hierdurch wird eine höhere Flexibilität des erfindungsgemäßen Logistiksystems erreicht, da die Übergabestation zwischen mehreren Andockstationen verfahren werden kann. Auch kann ein Lkw durch die Übergabestation bedient werden, der an einer falschen Andockstation steht, ohne dass ein erneutes Umrangieren des Lkws nötig ist. Ferner kann in dieser Ausführung des erfindungsgemäßen Logistiksystems gegebenenfalls auf die Quervorschubeinheit 80 verzichtet werden, da die Verfahrbewegung quer zur Beförderungsrichtung durch das Gleitplattensystem durchgeführt werden kann. Hierdurch kann das erfindungsgemäße Logistiksystem vereinfacht und Kosten reduziert werden.

Gemäß einem weiteren Aspekt des erfindungsgemäßen Logistiksystems kann der Seilantrieb Seilwinden aufweisen, mittels denen die Gleitplatte über an dieser angreifende Zugseile bewegbar ist.

Gemäß einem weiteren Aspekt des erfindungsgemäßen Logistiksystems kann die Übergabestation eine Bodenplatte aufweisen, auf der die Gleitplatte gleitend bewegbar ist. In einem Anwendungsbeispiel kann der Seilantrieb aus vier Seilwinden bestehen, von denen jeweils zwei an gegenüberliegenden Enden der Bodenplatte, beispielsweise in der Nähe der vier Ecken der Bodenplatte, angeordnet sein, wobei die Fläche der Bodenplatte im Wesentlichen dem Verschiebungsbereich der Gleitplatte entspricht. Ferner können jeweils zwei gegenüberliegende Seilwinden über ein Zugseil miteinander verbunden sein, wobei das Zugseil mit der dazwischenliegenden Gleitplatte im Eingriff steht.

Die Erfindung ist nachfolgend anhand von Ausführungsbeispielen unter Bezugnahme auf die Zeichnungsfiguren näher erläutert. Es zeigen:
**Fig. 1** eine schematische Prinzipskizze eines Logistiksystems mit einer Übergabestation in einem Ausgangszustand;
**Fig. 2** eine schematische Prinzipskizze eines Logistiksystems mit einer Übergabestation beim Entladen mit Lädungsträger;
**Fig. 3** eine schematische Prinzipskizze eines Logistiksystems mit einer Übergabestation beim Beladen mit zwei Ladungsträgern;
**Fig. 4** eine schematische Prinzipskizze eines Logistiksystems mit einer Übergabestation beim erneuten Entladung mit nur einem Ladungsträger;
**Fig. 5** eine schematische Prinzipskizze eines Logistiksystems beim Querverfahren der Übergabestation;
**Fig. 6** eine schematische Prinzipskizze eines Logistiksystems mit einer Übergabestation beim Beladen mit Ladungsgut und neuem Ladungsträger; und
**Fig. 7** eine schematische Prinzipskizze eines Logistiksystems mit einer Übergabestation in einem Endzustand nach erfolgter Beladung.

Die folgenden Ausführungsbeispiele der Erfindung basieren auf einem Logistiksystem mit einer über eine Gleitplatte querverschiebbaren Übergabestation.

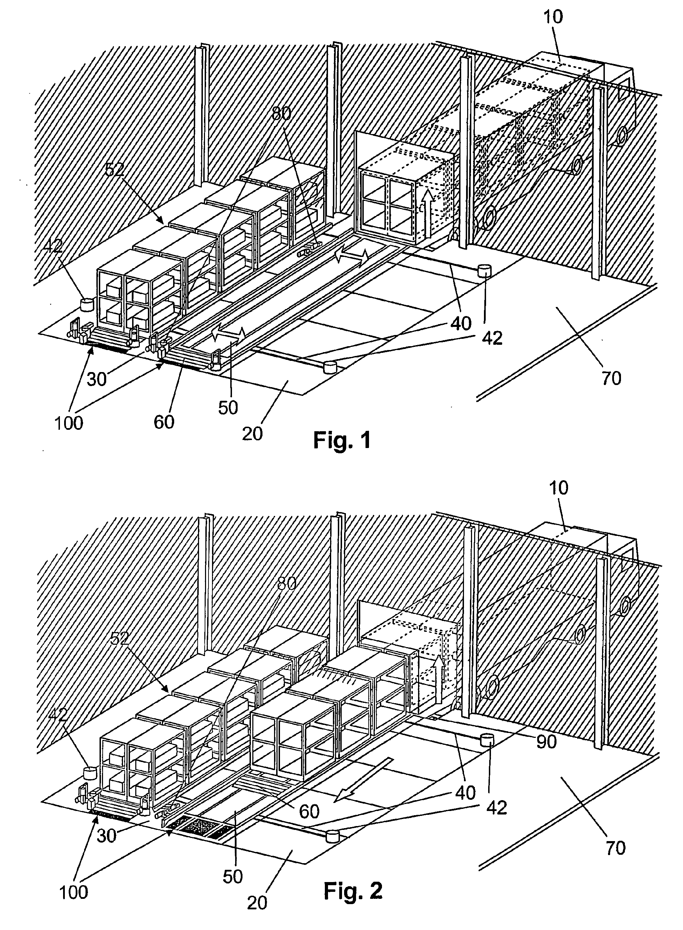

**Fig. 1** zeigt eine schematische Prinzipskizze eines Logistiksystems mit einer auf einer Laderampe 70 angeordneten Übergabestation gemäß einem ersten Ausführungsbeispiel der vorliegenden Erfindung im Ausgangszustand vor einer Beladung eines Lastkraftwagens (Lkws). Ladegut oder Fracht 52 sind an der Übergabestation bereitgestellt. Die Übergabestation weist zwei parallel zueinander angeordnete Aufnahmen 100 auf, die jeweils eine zwei Plattformen 50 aufnehmen können. Die beiden Aufnahmen 100 können in Querrichtung, d.h. quer zur Be- bzw. Entladerichtung (Längsrichtung), verfahren bzw. ausgerichtet werden. Hierzu ist ein Seilantrieb vorgesehen sowie seitliche Ausrichteinheiten 80, wobei die beiden Aufnahmen 100 nebeneinander auf einer Gleitplatte 30 montiert sind und mittels Seilwinden 42 komplett über eine auf dem Hallen- oder Rampenboden befestigte Bodenplatte 20 gezogen werden können.

Die Aufnahmen 100 besitzen jeweils eine Längsvorschubeinheit (z.B. Schubrampe) 60, mittels der auf den Aufnahmen 100 befindliche Plattformen 50 in Längsrichtung, d.h. in Richtung eines zu ent- bzw. beladenden Lkws 10 bewegt werden können. Mittels der seilgetriebenen Gleitplatte 30 können die Aufnahmen 100 in Querrichtung B, d.h. quer zur Längsrichtung, bewegt werden. Zusätzlich können die seitlichen Ausrichteinheiten 80 die Aufnahmeeinheit 100 auf den LKW-Auflieger 10 ausrichten. Auf diese Weise kann eine Plattform 50 (beladen oder unbeladen) in der Längsrichtung von einem Lkw 10 auf eine der Aufnahmen 100 aufgenommen oder von der jeweiligen Aufnahme 100 an den Lkw 10 abgegeben werden. Ferner können die Aufnahmen 100 mit bis zu zwei aufgenommenen Plattformen 50 (jeweils beladen und/oder unbeladen) in der Querrichtung verfahren werden.

Hierdurch ist es auf einfache Art und Weise ohne große Kosten und bauliche Veränderungen möglich, eine Plattform 50 oder zwei Plattformen 50 (jeweils beladen und/oder unbeladen) von dem Lkw 10 aufzunehmen und/oder eine Plattform 50 oder zwei Plattformen 50 (jeweils beladen und/oder unbeladen) an den Lkw 10 abzugeben. Jede abzugebende Plattform 50 kann unabhängig von der Ankunft des Lkw 10 mit der Fracht 52 beladen und jede erhaltene Plattform 50 nach Abfahrt des Lkw 10 entladen werden.

Gemäß dem ersten Ausführungsbeispiel können also zwei Plattformen 50 nebeneinander beide im Wesentlichen parallel zu der Beförderungsrichtung auf den beiden Aufnahmen 100 aufgenommen werden, wobei auch drei oder mehr Aufnahmen 100 für weitere Plattformen 50 vorgesehen sein können.

Die gleitfähig ausgebildete Übergabestation kann mitsamt ihrer Aufnahmen 100 und Plattformen 50 auf der Laderampe 70 durch Gleiten versetzt werden, insbesondere quer zur Beförderungsrichtung. Hierzu ist an der Laderampe 70 die für diese Gleitbewegung geeignete Bodenplatte 20 vorgesehen, insbesondere mit solchen Abmessungen, dass die Übergabestation auch beim Verfahren von einer Position zu einer anderen Position vollständig auf der Bodenplatte 20 aufliegen kann. Die Bodenplatte 20 kann dabei als eine Grundplatte aufgefasst werden, welche auch eine genaue horizontale waagerechte Ausrichtung der Übergabestation sicherstellen kann. Die auf der Bodenplatte 20 aufliegende Gleitplatte 30 ist im Wesentlichen vollständig flächig ausgebildet, so dass eine flächige Lastverteilung ohne Druckstellen realisiert werden kann. Die Übergabestation mit der Bodenplatte 20 und der Gleitplatte 30 sind dabei auf der Laderampe 70 in einer solchen Höhe gegenüber dem Boden, auf welchem der Lkw 10 steht, angeordnet, dass die auf der Aufnahme 100 gelagerte Plattform 50 in etwa die Höhe der Ladefläche des Lkw 10 einnimmt. Eine genaue Höhenausrichtung der Ladefläche gegenüber der Plattform 50 kann dabei z.B. durch Ausrichtung der Ladefläche über eine Hubeinheit 90 erfolgen.

In einem zweiten Ausführungsbeispiel kann die Übergabestation auch dann als gleitfähige Übergabestation ausgebildet sein, wenn keine Laderampe 70 vorgesehen ist. Hierbei wird dann z.B. ein geeigneter Unterbau zur Höhenanpassung an die Höhe üblicher Lkw-Ladeflächen vorgesehen sein.

Für eine möglichst reibungsarme Bewegung der Gleitplatte 30 über der Bodenplatte 20 kann ein Gleit- bzw. Schmiermittel vorgesehen sein. Durch geeignete Wahl der Materialpaarung zwischen der Gleitplatte 30 und der Bodenplatte 20 oder der jeweiligen Oberflächenstrukturen kann eine reibungsarme Bewegung erzielt werden, so dass auch auf das Gleit- bzw. Schmiermittel verzichtet werden kann.

Wie in **Fig. 1** gezeigt, kann die Bewegung der Gleitplatte 30 über der Bodenplatte 20 mittels eines Zugmechanismus erreicht werden, insbesondere in Form eines Seilzugs. Bevorzugt können hierzu zwei Zugseile 40 eingesetzt werden, vorzugsweise in Kombination mit vier Seilwinden 42, wobei jeweils zwei Seilwinden 42 über ein Zugseil 40 miteinander in Verbindung stehen und die Zugseile längs der Richtung ausgerichtet und gespannt sind, in welche die Übergabestation mittels der Zugseile 40 und der Seilwinden 42 bewegt werden soll. Die Seilwinden 42 können dabei im Wesentlichen an den Rändern der Bodenplatte 20 angeordnet sein, insbesondere an den Rändern der zu der Beförderungsrichtung der Plattformen parallelen Seiten der Bodenplatte 20. Die Seilwinden 42 können dabei beispielsweise in den Ecken der Bodenplatte 20 angeordnet sein, d.h. sie sind möglichst weit voneinander beabstandet und greifen derart an der Übergabestation an, dass diese beim Verfahren auf der Bodenplatte 20 genau und stabil gezogen werden kann. Die Zugseile 40 sind bevorzugt über die Gleitplatte 30 mit der Übergabestation verbunden und können knapp oberhalb der Gleitplatte 30 verlaufen bzw. auf dieser zum Anliegen kommen und daran befestigt sein. Insbesondere können die Zugseile 40 zwischen der Gleitplatte 30 und der jeweiligen Auflage 100 geführt sein. Bei einer Beförderung einer Plattform 50 in Beförderungsrichtung kann dabei eine Behinderung durch das jeweilige Zugseil 40 dadurch vermieden werden, dass das Zugseil unterhalb oder innerhalb der Auflagen 100 geführt ist. Die Zugseile können auch nur am jeweiligen Rand der Gleitplatte 30 angreifen und dort befestigt sein, so dass sich im Bereich der Aufnahmen 100 keine Zugseile befinden. Eine Fixierung der Zugseile 40 an der Gleitplatte 30 kann durch lösbare oder feste Verbindungselemente (z.B. Haken, Schrauben, Schlaufen etc.) erfolgen.

Die vorgeschlagene Übergabestation mit der Gleitplatte 30 weist den Vorteil auf, dass keine spürbar störenden Hindernisse für Gabelstapler oder dergleichen zum Kommissionieren bzw. Be- und Entladen vorhanden sind. Das Zugseil kann so geführt werden, dass es kein Hindernis für einen Gabelstapler oder dergleichen darstellt. So ist es z.B. auch möglich, die Zugseile 40 etwas in den Boden bzw. in die Bodenplatte 20 abzusenken oder zumindest die Seilwinden im Wesentlichen abgesenkt oder ganz in den Boden bzw. die Bodenplatte 20 eingelassen auszuführen. Je nachdem, wie der Hallenboden bzw. der Boden der Laderampe 70 ausgeführt ist, kann es auch möglich sein, die Gleitplatte 30 so auszuführen, dass nicht zusätzlich die spezifische Bodenplatte 20 vorgesehen werden muss, was ein Nachrüsten der erfindungsgemäßen gleitbaren Übergabestation erleichtert.

Der Ent- und Beladevorgang mittels des ersten Ausführungsbeispiels des erfindungsgemäßen Logistiksystem soll im Folgenden beispielhaft anhand der **Fig. 1 bis 7** erläutert werden. Dabei sind die folgenden Erläuterungen, die sich auf das Entladen einer unbeladenen Plattform 50 und das anschließende Beladen einer mit Fracht 52 beladenen Plattform 50 beziehen, ebenso auf andere Ent- und Beladevorgänge anzuwenden.

Wie in **Fig. 1** gezeigt, ist der Lkw 10 rückwärts an die Rampe 70 einer Andockstation eines Lagergebäudes so herangefahren, dass der Lkw 10 direkt vor der Andockstation steht. Er wurde mit der Hubeinheit 90 auf die Höhe des auf der Aufnahme 100 befindlichen leeren Ladungsträgers 50 ausgerichtet, so dass der Ladungsträger 50 und die Ladefläche des Lkws 10 eine horizontale Ebene bilden. Der in vertikale Richtung zeigende Pfeil am Lkw 10 deutet eine mögliche Hubbewegung des Lkw 10 mittels der Hubeinheit 90 an. Die Aufnahme 100 wird nun mittels seitlichen Ausrichteinheiten 80 zum Lkw 10 so bewegt, dass die Ladefläche des Lkws 10 zur betreffenden Aufnahme 100 der Überstation 20 ausgerichtet ist. Die beiden Pfeile in Querrichtung deuten an, dass das vordere bzw. hintere Ende der Auflagen 100 über die entsprechenden Ausrichteinheiten 80 wahlweise in Querrichtung bewegt werden können, so dass die Auflagen 100 auf der Gleitfläche 30 fluchtend zur Ladefläche des Lkw 10 ausgerichtet werden können. Auf der Ladefläche des Lkws 10 ist eine beladene Plattform 50 ohne Ladegut vorhanden, die vom Lkw 10 zu entladen ist. Entsprechend weist die mit der Ladefläche des Lkw 10 fluchtende Aufnahme 100, in diesem Beispiel die in Fig. 1 rechts angeordnete Aufnahme 100, eine leere Plattform 50 auf, auf die die beladene Plattform vom Lkw 10 aufzunehmen ist.

Zum Entladen der Plattform 50 von der Ladefläche des Lkws 10 wird die zur Entladung vorgesehene Aufnahme 100 mittels der Seilwinden 42 so in der Übergabestation 20 seitlich, d.h. in der Querrichtung, verfahren, dass die leere Aufnahme 100 vor der Andockstation positioniert wird. Dann verfährt die Längsvorschubeinheit 60 entlang der leeren Aufnahme 100 in Längsrichtung über der leeren Plattform 50 bis zur Andockstation, so dass beispielsweise ein Mitnahmebügel (nicht gezeigt) in eine Aussparung der im Laderaum des Lkws 10 befindlichen Plattform 50 eingreifen kann.

**Fig. 2** zeigt eine schematische Prinzipskizze eines Logistiksystems in einem zweiten Schritt eines Ent-/Beladevorgangs. Die Längsvorschubeinheit 60 bewegt sich auf der Aufnahme 100 in Längsrichtung von der Andockstation weg und zieht damit die Plattform 50 mit unbeladenem Gütergestell mittels des Mitnahmebügels von der Ladefläche des Lkws 10 herunter und auf die leer, auf der Auflage 100 befindliche Plattform. Ist die der Andockstation gegenüberliegende Seite der Aufnahme 100 erreicht und damit die Plattform 50 mit leerem Gütergestell vollständig von der Ladefläche des Lkw 10 heruntergezogen, wird der Mitnahmebügel aus der Aussparung herausgelöst. Jetzt befindet sich das leere Gütergestell mit zwei darunter aufeinanderliegenden Plattformen 50 auf der Auflage 100. Die Plattform 50 des Lkw 10 wurde also auf die leere Plattform 50 der Auflage 100 gefördert.

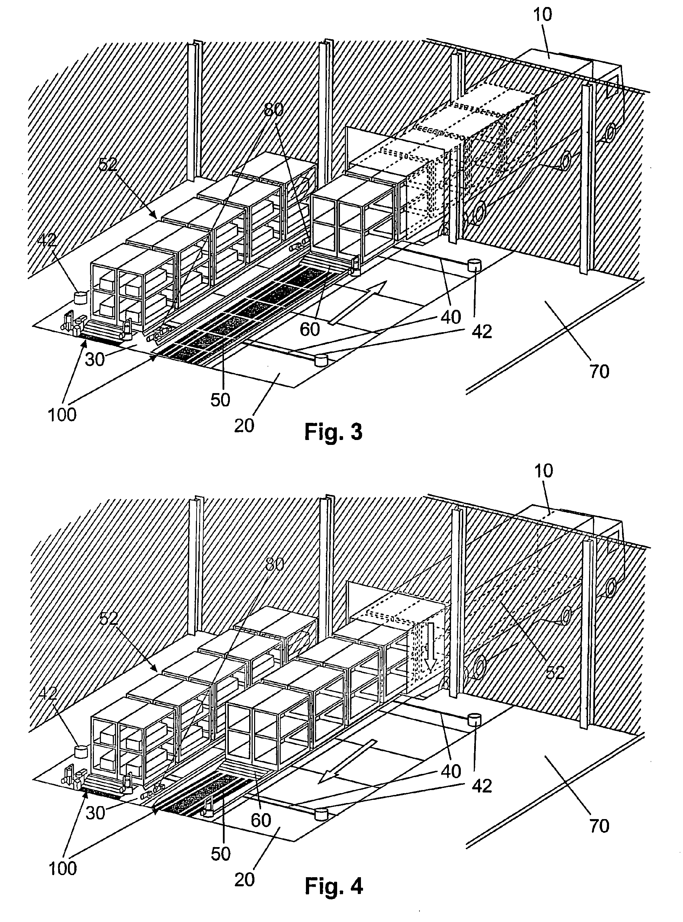

Nachdem die Hubeinheit 90 den Lkw 10 in **Fig. 3** in der Höhe wieder neu ausgerichtet hat, werden beide Plattformen 50 (die leere und die mit dem leeren Gütergestell beladene) mittels der Längsvorschubeinheit 60 wieder in den Lkw 10 gefördert.

Nachdem die beiden Plattformen 50 in dem Lkw 10 platziert wurden, wird die untere Plattform mittels einer Plattformsicherung (nicht gezeigt) in dem Lkw 10 fixiert und die Hubeinheit 90 richtet den Lkw 10 ein weiteres Mal aus.

In **Fig. 4** fördert nun die Längsvorschubeinheit 60 die obere Plattform mit dem leeren Gütergestell wieder aus dem Lkw 10 heraus. Die fixierte leere Plattform 52 verbleibt im Lkw 10. Dieses Wechseln der Plattformen 50 dient zur Vermeidung einer dritten Auflage und kann als "Sandwich-Prinzip" bezeichnet werden.

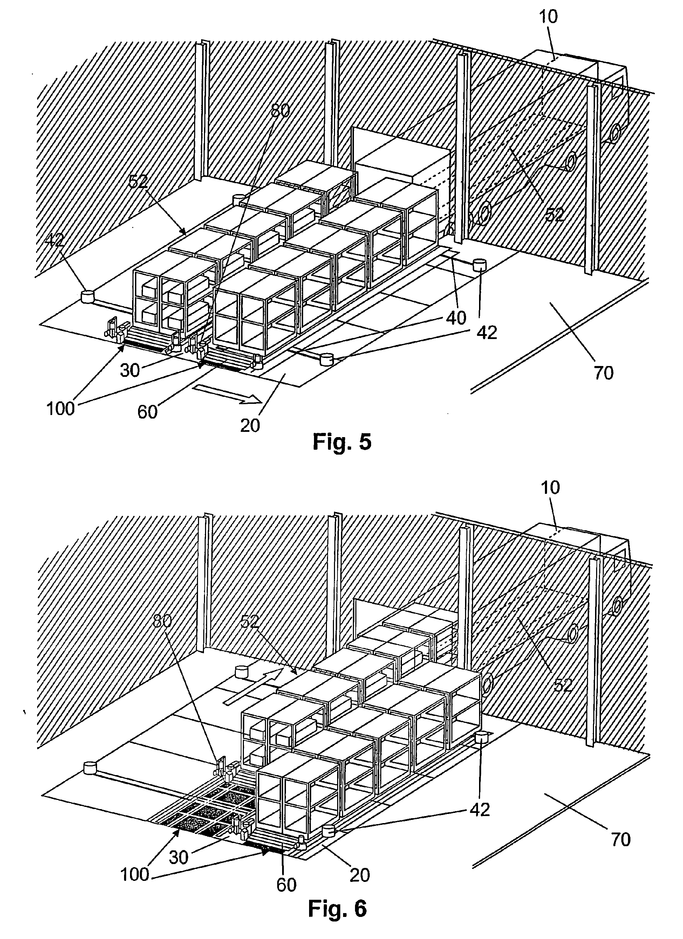

Nun befindet sich eine leere Plattform 52 im Lkw 10 und es kann damit begonnen werden, den Lkw mit der auf der zweiten Aufnahme 100 befindlichen Fracht 52 zu beladen. Hierzu wird nun in **Fig. 5** die Gleitfläche 30 mit den beiden Aufnahmen 100 mittels den Seilwinden 42 gezogen, um in Querrichtung zu verfahren, so dass die linke Aufnahme 100, die die zu ladende, mit Ladegut oder Fracht 52 bestückte Plattform 50 enthält, vor die Andockstation verfahren wird. Die Gleitplatte 30 gleitet dabei über die am Boden befestigte Bodenplatte 20.

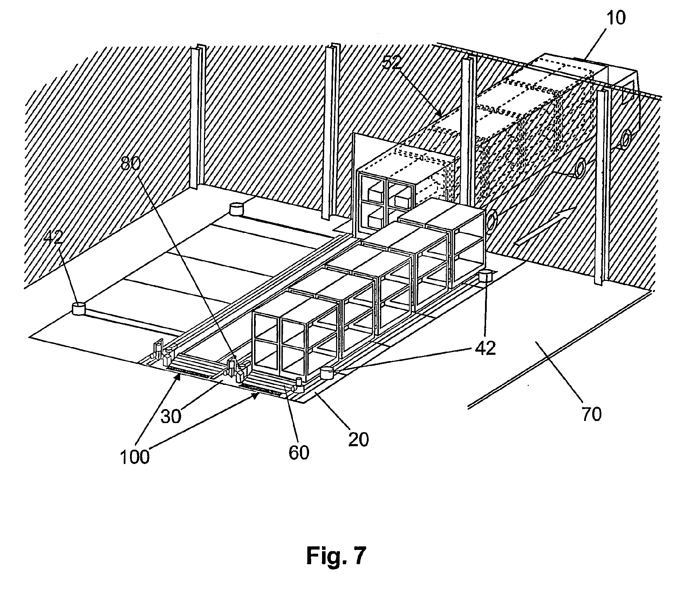

Ist die linke Aufnahme 100 mittels der Seilwinden 42 vor dem Lkw 10 positioniert, kann die beladene Plattform 50 mittels des bereits beschrieben Sandwich-Prinzips in den Lkw 10 eingelagert werden. Dabei wird zunächst in **Fig. 6** der Mitnahmebügel (nicht gezeigt) mit einer Aussparung der beladenen Plattform 50 in Eingriff gebracht und die mit der Fracht 52 beladene Plattform 50 wird durch die Längsvorschubeinheit 60 in Längsrichtung von der linken Aufnahme 100 auf die leere Plattform 52 auf der Ladefläche des Lkws 10 bewegt. Nun erfolgt wiederum das erneute Entladen mit beiden übereinander befindlichen Plattformen, gefolgt vom erneuten Beladen mit der Fracht 52 und nur einer Plattform, so dass letztlich wieder eine leere Plattform auf der linken Aufnahme 100 verbleibt, wie in **Fig. 7** gezeigt ist. Die Ladefläche des Lkw 10 wurde somit während des Ent-/Beladevorgangs als Zwischenlager für die leere Plattform verwendet.

Selbstverständlich ist die Übergabestation mit Gleitfläche 30 und Seilwinden 42 auch in Logistiksystemen vorteilhaft anwendbar, die nicht nach dem Sandwich-Prinzip arbeiten.

Die zu ladende Fracht 52 kann also bereits vor der Ankunft des Lkw 10 auf die Plattform 50 geladen werden, ohne das hierfür die Anwesenheit des Lkws 10 an der Andockstation erforderlich ist. Somit kann einerseits die Andockstation während des Beladens der Plattform 50 anderweitig, z.B. für das Be- und Entladen eines anderen Lkw 10 mittels weiterer Transportmittel, genutzt werden, und andererseits steht der mit der beladenden Plattform 50 zu beladende Lkw 10 in dieser Zeit für andere Transporte und Aufgaben zur Verfügung. Hierdurch kann wesentlich Zeit und damit Kosten eingespart und eine höhere Flexibilität als bei herkömmlichen Logistiksystemen erreicht werden. Gleichzeitig ist das erfindungsgemäße Logistiksystem einfach gestaltet und montierbar.

Die Längsvorschubeinheit 60 kann im ersten und zweiten Ausführungsbeispiel einen Getriebemotor aufweisen, der ein Zahnrad aufweist, welches in eine Zahnstange eingreift, um die jeweilige Vorschubbewegung zu erzeugen. Allerdings sind auch alternative Antriebstechniken, wie beispielsweise unter Einsatz von Rollen oder sonstigen Führungselementen, möglich.

Sowohl im ersten als auch im zweiten Ausführungsbeispiel des erfindungsgemäßen Logistiksystems wird der Mitnahmebügel, welcher fest mit der Schubrampe verbunden ist, von einem Bediener, z.B. dem Verlader oder Lkw-Fahrer, über den vertikalen Höhenausgleich der Längsvorschubeinheit (Schubrampe) 60 bewegt.

Ferner kann das Verfahren der Gleitfläche 30 in Querrichtung mittels der Seilwinden 42 sowie das Verfahren der Plattform 50 in Beförderungsrichtung mittels der Längsvorschubeinheit 60 durch ein manuelles Bedienen erfolgen, um gegebenenfalls die Bewegungsgeschwindigkeit einzustellen oder die Vorschubbewegung zu starten bzw. zu beenden. Dabei kann das Beenden der jeweiligen Vorschubbewegung zusätzlich oder alternativ auch automatisch erfolgen, um eine Kollision der Aufnahme 100 bzw. der Plattform 50 mit der Umgebung zu vermeiden. Das Erreichen einer Endposition der Vorschubbewegung kann dabei durch Sensoren wie Tastschalter oder Lichtschranken ermittelt werden. Auf diese Weise kann die Sicherheit des Logistiksystems für den Bediener und die Umgebung gewährleistet werden, wobei die Gleitfläche 30 bzw. die Plattform 50 nur innerhalb bestimmter Grenzen verfahren werden können.

Alternativ kann die Bedienung der Bewegung der Gleitfläche 30 bzw. der Aufnahmen 100 auch durch den Bediener durch ein Bediengerät erfolgen, welches z.B. an der Andockstation fest installiert ist oder auch als mobiles Bediengerät vom Bediener mitgeführt werden kann. Dabei kann dieses Bediengerät mit einer Steuerungseinheit der jeweiligen Vorschubeinheit, einer zentralen Steuerungseinheit der Übergabestation oder auch einer zentralen Steuerungseinheit des gesamten Logistiksystems verbunden sein oder auch selbst eine Steuereinheit besitzen, an die die Eingaben des Bedieners vom Bediengerät übermittelt werden. Entsprechend kann sowohl ein separates Bediengerät für jede Vorschubeinheit, ein gemeinsames Bediengerät für die beiden Vorschubeinheiten einer Übergabestation oder auch ein zentrales Bediengerät für mehrere Übergabestationen bzw. für das gesamte Logistiksystem vorgesehen sein. Die Verbindung zwischen der jeweiligen Steuerungseinheit und dem entsprechenden Bediengerät kann über ein Kabel ebenso erfolgen wie über eine kabellose Übertragung, für die Funk-, Laser- oder Infrarotübertragungstechniken ebenso wie weitere Übertragungstechniken in Frage kommen. Ferner kann die kabelgebundene oder kabellose Übertragung direkt zwischen Bediengerät und Steuerungseinheit erfolgen oder aber auch über ein zentrales Übertragungssystem wie ein Bussystem, welches für eine oder mehrere Übergabestationen oder sogar das gesamte Logistiksystem vorgesehen sein kann.

Die zentrale Steuerungseinheit verarbeitet dann die vom Bediengerät erhaltenen Eingaben des Bedieners und steuert die Vorschubeinheiten entsprechend an. Ferner kann die zentrale Steuerungseinheit Informationen wie z.B. die vorgegebene Bewegungsgeschwindigkeit oder Bewegungsrichtung, die aktuelle Position in der jeweiligen Bewegungsrichtung, den noch verbleibenden Restverfahrweg in der aktuellen Bewegungsrichtung, das Erreichen einer Position, ab der der eine Mitnahmebügel aus der Aussparung hochgeklappt werden und der andere Mitnahmebügel in die Aussparung eingreifen kann, den Status der Vorschubeinheit (z.B. Vorschubeinheit eingeschaltet, Vorschubeinheit in Bewegung, Vorschubeinheit im Stillstand, Vorschubeinheit blockiert, unzulässige Eingabe/Einstellung, Fehler etc.) oder weitere Informationen von den Vorschubeinheiten erhalten bzw. selbst bestimmen und an das Bediengerät weitergeben. Diese Informationen können dann dem Bediener auf dem Bediengerät angezeigt werden. Auch können diese Informationen in der zentralen Steuerungseinheit selbstständig und automatisiert verarbeitet werden, um z.B., wie bereits weiter oben beschrieben, eine Vorschubbewegung bei Erreichen einer Grenzposition auch ohne Eingabe des Bedieners selbstständig zu beenden.

Auch können an der Längsvorschubeinheit 60 Sensoren wie Taster, Lichtschranken, Laserabstandsmesser oder mehrdimensionale Laserscanner oder andere Sensoren vorgesehen werden, um die Aussparungen der Plattform 50 selbstständig durch die Steuerungseinheit zu erkennen und die Längsvorschubeinheit 60 selbstständig in eine Position zu verfahren, dass der entsprechende Mitnahmebügel in die erkannte Aussparung eingreifen kann. Dabei können generell alle in den Fig. 1 bis 7 beschriebenen Schritte eines Ent- und Beladevorgangs ebenso wie alle sonstigen Be- und Entladevorgänge durch eine entsprechende Steuerungseinheit, der die entsprechenden Informationen zur Verfügung stehen und die die entsprechenden Antriebe ansteuern kann, entweder in Einzelschritten, Teilschritten oder als automatisierter Programmablauf eine Ent- oder Beladevorgangs nach einmaliger Eingabe oder jeweiliger Eingabe für dem entsprechenden Einzel- oder Teilschritt durch den Bediener durchgeführt werden.

In beiden Ausführungsbeispielen ist es erforderlich, dass der Lkw 10 möglichst nah an den Rammbock und damit auch an die Übergabestation heranfährt, damit der Mitnahmebügel in die Aussparung der Plattform 50 eingreifen kann, die sich auf der Ladefläche des Lkw 10 befindet. Andersherum bedeutet dies, dass, wenn der Abstand zwischen Lkw 10 und der Längsvorschubeinheit 60 der Übergabestation so groß ist, dass der Mitnahmebügel nicht in die Aussparung der Plattform 50 auf dem Lkw 10 eingreifen kann, die Plattform 50 nicht aus dem Lkw 10 zur Aufnahme 100 gezogen werden kann. Ebenso kann auch eine Plattform 50 nicht vollständig auf die Ladefläche eines Lkw 10 befördert werden und ragt dann aus dem Lkw 10 heraus, was für einen Transport nicht zulässig ist. Daher ist es wichtig, den Abstand zwischen der Rückseite des Lkw 10 und der Übergabestation gering zu halten. Hierzu ist es vorteilhaft, wenn bereits während des Heranfahrens rückwärts an die Andockstation bzw. die Übergabestation dem Fahrer der verbleibende Abstand angezeigt wird. Auf diese Weise kann eine bessere Positionierung vorgenommen werden als wenn der Fahrer des Lkw 10 lediglich mittels eines Rückspiegels oder einer Rückfahrkamera den verbleibenden Abstand abschätzt.

Ferner kann mittels zwei Abstandssensoren auch die Schiefstellung des Lkws 10 gegenüber der Andockstation bzw. der Übergabestation bestimmt werden. Hierzu werden die beiden Abstände jeweils gemessen und dann die Differenz aus den beiden Abständen bestimmt. Je größer die Differenz ist, umso größer ist die Schiefstellung. Dabei gibt gleichzeitig das Vorzeichen der Differenz die Richtung der Schiefstellung an. Diese Richtung der Schiefstellung kann zur Korrektur der Orientierung des Lkws 10 gegenüber der Andockstation bzw. der Übergabestation dem Fahrer angezeigt werden. Alternativ kann auch die entgegengesetzte Richtung zur Schiefstellung angezeigt werden, d.h. die Richtung, in die die Lenkbewegung zu korrigieren ist, um die Schiefstellung auszugleichen, d.h. zu minimieren. Ebenso kann die Differenz der beiden Abstände dem Fahrer angezeigt werden als Maß dafür, wie sehr die Orientierung des Lkws 10 zu korrigieren ist. Anstelle eines konkreten Zahlenwertes für die Differenz der Abstände kann auch eine relative Information angezeigt werden, die z.B. lediglich die Qualität der Schiefstellung von z.B. gering bis sehr stark anzeigt. Diese Anzeige kann z.B. über die Länge eines Balkens oder dergleichen erfolgen. Auch kann die Anzeige anzeigen, dass aufgrund der aktuellen Schiefstellung des Lkws 10 und dem bestimmten verbleibenden Abstands eine erforderliche Korrektur der Schiefstellung nicht mehr durchführbar ist und daher bereits zu diesem Zeitpunkt das Rückwärtsheranfahren abgebrochen und ein erneuter Rangierversuch unternommen werden sollten. Hierdurch kann beim Rangieren Zeit eingespart werden.

Bei beiden Ausführungsbeispielen kann zusätzlich oder alternativ die Positionierung und korrekte Orientierung des Lkws 10 gegenüber der Andockstation bzw. der Übergabestation auch mittels eines Positioniersystems durchgeführt werden. Ein solches Positioniersystem weist beispielsweise einen Positionsfinder auf, der an der Seite der Übergabestation unterhalb der Aufnahmen 100 so vorgesehen ist, dass der Positionsfinder in Beförderungsrichtung zu dem Lkw 10 ausgerichtet ist, der zu ent- bzw. beladen ist. Dabei strahlt der Positionsfinder einen Lichtkegel ab, der von einem entsprechenden Reflektor zurückgeworfen und wieder vom Positionsfinder aufgenommen wird. Hierdurch kann der Positionsfinder die Position des Reflektors in der vertikalen Richtung und Querrichtung zur Beförderungsrichtung bestimmen.

Der Reflektor ist dabei auf der Rückseite eines Lkw 10 derart vorgesehen, dass sich der Reflektor unterhalb der Ladefläche des Lkws 10 an einer bekannten und festgelegten Position befindet. Hierdurch kann durch den Positionsfinder, wenn die Position der Ladefläche des Lkws 10 relativ zur Position des Reflektors bekannt ist, die Position der Ladefläche des Lkws 10 bestimmt werden. Zur Umsetzung dieses Positioniersystems ist lediglich ein Reflektor am Lkw 10 vorzusehen, wodurch dieses Positioniersystem mit minimalen Veränderungen am Lkw auskommt.

Diese Positionsinformation kann z.B. dafür verwendet werden, eine mit entsprechenden Antrieben ausgestattete Übergabestation in vertikaler Richtung und/oder in Querrichtung derart zu verfahren, dass die Übergabestation an der Ladefläche des Lkws 10 ausgerichtet wird. Auf diese Weise muss ein unzureichend positionierter Lkw 10 nicht umrangiert werden, um seine Position zu verbessern, sondern die Übergabestation kann der Ladefläche des Lkws 10 nachgeführt werden, was zeitsparender als Umrangieren ist.

Ferner kann ein Lichtgitter vorgesehen sein, das vor der Übergabestation auf der Seite in Beförderungsrichtung, an der der Lkw 10 zu positionieren ist, derart angeordnet ist, dass der Lkw 10 mit seinem Aufbau rückwärts in den Erfassungsbereich des Lichtgitters hineinfahren kann. Das Lichtgitter weist eine Lichtstrahleinteilung auf, mittels der in Schritten bestimmt werden kann, wie weit der Aufbau des Lkws 10 bereits in den Erfassungsbereich des Lichtgitters hinein bewegt wurde. Da das Lichtgitter in einem festen und bekannten Abstand zur Übergabestation vorgesehen ist, ist über die Position des Lkws 10 im Erfassungsbereich des Lichtgitters auf der Abstand des Lkws 10 zur Übergabestation bekannt.

Der mittels Positionsfinder und bzw. oder Lichtgitter bestimmte Abstand kann über z.B. eine farbige Ampel (nicht gezeigt) dem Fahrer angezeigt werden, ob der Lkw 10 noch weiter in Beförderungsrichtung zur Übergabestation zu bewegen ist oder ob der Lkw 10 sogar schon zu weit zur Übergabestation bewegt wurde. So kann z.B. ein gelbes Ampelsignal anzeigen, dass sich der Lkw 10 bereits mit seinem Aufbau rückwärts in dem Erfassungsbereich des Lichtgitters befindet aber noch weiter rückwärts zu bewegen ist. Ein rotes Ampelsignal könnte z.B. anzeigen, dass die Position erreicht ist, um die Plattform zu übernehmen oder zu übergeben. Und ein rotes blinkendes Ampelsignal könnte z.B. anzeigen, dass der Lkw 10 bereits über die Endposition hinausgefahren ist und weiter in Beförderungsrichtung A von der Übergabestation weg zu bewegen ist. Zusätzlich oder alternativ kann auch der Abstand selbst angezeigt werden oder es sind andere Signale möglich, um aufgrund des mittels des Lichtgitters ermittelten Abstandes zur Positionierung des Lkws 10 zu nutzen. Der mittels Lichtgitter bestimmte Abstand kann auch wie der mittels Abstandssensoren bestimmte Abstand dem Fahrer angezeigt werden.

Als weitere Alternative kann ein Laserscanner vorgesehen sein, der ebenso wie der Positionsfinder an der Übergabestation angeordnet ist. Mittels eines solchen Laserscanners, der üblicherweise als mehrdimensionaler Laserscanner ausgeführt ist, kann der Bereich vor der Übergabestation überwacht werden. So können mehrdimensionale Strukturen wie Ladungsreste, leere Ladungsträger, Holzbalken, Verpackungsmaterial oder auch Personen erkannt werden, die sich in diesem Bereich befinden und einen rückwärtsfahrenden Lkw 10 behindern oder durch diesen gefährdet werden würden. Durch den mehrdimensionalen Laserscanner können diese Objekte und Personen sicher und zuverlässig automatisch erkannt werden. Die Präsenz von Hindernissen und Personen kann dann durch geeignete Warnmittel dem Fahrer des rückwärtsfahrenden Lkws 10 oder auch weiteren Personen im Bereich der Übergabestation 10 bzw. den gefährdeten Personen selbst angezeigt werden. Hierzu können optische Warnmittel wie blinkende Rundumkennleuchten oder akustische Warnsignalgeber verwendet werden. Auch läßt sich die Präsenz von Hindernissen und Personen mittels der Anzeigemittel der Abstandssensoren, des Positionsfinders und bzw. oder des Lichtgitters kombinieren.

Ferner ist es auch möglich, den Positionsfinder, das Lichtgitter und den mehrdimensionalen Laserscanner an ein und derselben Übergabestation gemeinsam einzusetzen, um die verschiedenen Überwachungsmöglichkeiten der einzelnen Systeme zu kombinieren und so deren Vorteile in einer gemeinsamen Überwachungsanlage zu nutzen. Diese Überwachungsanlage oder deren einzelne Systeme lassen sich auch in das Logistiksystem einbinden, um die deren Informationen im Rahmen des gesamten Logistiksystems für Überwachungsaufgaben wie die Statusbestimmung einzelner Übergabestationen zu ermitteln.

Alternativ zur Längsvorschubeinheit 60 an der Übergabestation kann auch eine Kette verwendet werden, um die Plattform 50 in Beförderungsrichtung zu bewegen. Dabei weist die Kette zahlreiche Kettenelemente auf, in die ein Zahnrad eingreift, um die Kette zu bewegen. Die einzelnen Kettenelemente weisen Kettenbolzen auf, die mittels Mitnehmerlaschen miteinander verbunden sind. Einige Kettenbolzen sind als verlängerte Kettenbolzen ausgeführt, um in die Plattform 50 einzugreifen und diese so mit zubewegen.

Zusammenfassend wurde ein Logistiksystem beschrieben zur Übergabe einer Plattform 50 in deren Beförderungsrichtung zu einem Fahrzeug 10 und/oder zur Übernahme einer Plattform 50 von einem Fahrzeug 10, wobei die Ausmaße der Plattform 50 an die der Ladefläche des Fahrzeugs 10 angepasst sind, wobei das Logistiksystem eine Übergabestation für zumindest zwei solche Plattformen 50 aufweist, um die Plattformen 50 in Beförderungsrichtung von dem Fahrzeug 10 zu übernehmen oder dorthin zu übergeben, und wobei die Übergabestation Aufnahmen 100 aufweist, auf denen Plattformen 50 abgelegt werden können und von denen Plattformen 50 in Beförderungsrichtung zu dem Fahrzeug 10 und/oder von dem Fahrzeug 10 beförderbar ist. Dabei wird vorgeschlagen, dass die Aufnahmen 100 so ausgebildet ist, dass sie zwei Plattformen in der Beförderungsrichtung parallel zueinander aufnehmen können, dass die Aufnahmen 100 eine Längsvorschubeinheit besitzt, um eine Plattform 50 in Beförderungsrichtung zu dem Fahrzeug 10 oder von dem Fahrzeug 10 zu bewegen, und dass die Aufnahme eine Quervorschubeinheit mit seilgetriebener Gleitflache 30 sowie Ausrichteinheiten 80 besitzt, um die Aufnahmen 100 in Richtung quer zur Beförderungsrichtung zu bewegen.

## Patentansprüche

1. Logistiksystem zur Übergabe einer Plattform (50) in deren Beförderungsrichtung zu einem Fahrzeug (10) und/oder zur Übernahme einer Plattform (50) von einem Fahrzeug (10),
wobei die Ausmaße der Plattform (50) an die der Ladefläche des Fahrzeugs (10) angepasst sind,
wobei das Logistiksystem eine Übergabestation für die Plattform (50) aufweist, um die Plattform (50) in Beförderungsrichtung von dem Fahrzeug (10) zu übernehmen oder dorthin zu übergeben,
wobei die Übergabestation zumindest zwei Aufnahmen (100) aufweist, auf denen jeweils eine Plattform (50) abgelegt werden kann und von denen die Plattform (50) in Beförderungsrichtung zu dem Fahrzeug (10) und/oder von dem Fahrzeug (10) beförderbar ist,
wobei die Aufnahmen (100) die Plattformen (50) in der Beförderungsrichtung parallel zueinander aufnehmen können, und
wobei die Aufnahmen (100) eine Längsvorschubeinheit (60) besitzen, um eine Plattform (50) in Beförderungsrichtung zu dem Fahrzeug (10) oder von dem Fahrzeug (10) zu bewegen,
**dadurch gekennzeichnet,**
**dass** die Aufnahmen (100) auf einer Gleitplatte (30) angeordnet sind, die mittels eines Seilantriebs (42) in Richtung quer zur Beförderungsrichtung bewegbar ist,
**dass** die Übergabestation eine Bodenplatte (20) aufweist, auf der die Gleitplatte (30) gleitend bewegbar ist, und
**dass** die Bodenplatte (20) auf dem Boden eines Gebäudes, insbesondere einer Lagerhalle, im Inneren des Gebäudes angeordnet ist.

2. Logistiksystem nach Anspruch 1, **dadurch gekennzeichnet,**
**dass** der Seilantrieb Seilwinden (42) aufweist, mittels denen die Gleitplatte (30) über an dieser angreifende Zugseile (40) bewegbar ist.

3. Logistiksystem nach Anspruch 2, **dadurch gekennzeichnet,**
**dass** der Seilantrieb aus vier Seilwinden (42) besteht, von denen jeweils zwei an gegenüberliegenden Enden der Bodenplatte (20) angeordnet sind, wobei die Fläche der Bodenplatte (20) im Wesentlichen dem Verschiebungsbereich der Gleitplatte (30) entspricht.

4. Logistiksystem nach Anspruch 3, **dadurch gekennzeichnet,**
**dass** die vier Seilwinden (42) im Wesentlichen in den Eckbereichen der Bodenplatte (20) angeordnet sind.

5. Logistiksystem nach Anspruch 3 oder 4, **dadurch gekennzeichnet,**
**dass** jeweils zwei gegenüberliegende Seilwinden (42) über ein Zugseil (40) miteinander verbunden sein, wobei das Zugseil (40) mit der dazwischenliegenden Gleitplatte (30) im Eingriff steht.

6. Übergabestation für ein Logistiksystem zur Übergabe einer Plattform (50) in deren Beförderungsrichtung zu einem Fahrzeug (10) und/oder zur Übernahme einer Plattform (50) von einem Fahrzeug (10),
wobei die Ausmaße der Plattform (50) an die der Ladefläche des Fahrzeugs (10) angepasst sind,
wobei die Übergabestation zumindest zwei Aufnahmen (100) aufweist, auf denen jeweils eine Plattform (50) abgelegt werden kann und von denen die Plattform (50) in Beförderungsrichtung zu dem Fahrzeug (10) und/oder von dem Fahrzeug (10) beförderbar ist,
wobei die Aufnahmen (100) die Plattformen (50) in der Beförderungsrichtung parallel zueinander aufnehmen können, und
wobei die Aufnahmen (100) eine Längsvorschubeinheit (60) besitzen, um eine Plattform (50) in Beförderungsrichtung zu dem Fahrzeug (10) oder von dem Fahrzeug (10) zu bewegen,
**dadurch gekennzeichnet,**
**dass** die Aufnahmen (100) auf einer Gleitplatte (30) angeordnet sind, die mittels eines Seilantriebs (42) in Richtung quer zur Beförderungsrichtung bewegbar ist,
**dass** die Übergabestation eine Bodenplatte (20) aufweist, auf der die Gleitplatte (30) gleitend bewegbar ist, und
**dass** die Bodenplatte (20) auf dem Boden eines Gebäudes, insbesondere einer Lagerhalle, im Inneren des Gebäudes angeordnet ist.

7. Verfahren zum Beladen von Fahrzeugen,
wobei ein Fahrzeug (10) mit einer unbeladenen Plattform (52) vor einer Übergabestation so positioniert wird, dass Plattformen (50) in Beförderungsrichtung von der Übergabestation zu dem Fahrzeug (10) und/oder von dem Fahrzeug (10) zu der Übergabestation beförderbar sind,
wobei die Übergabestation durch Verfahren quer zur Beförderungsrichtung mittels
einer seilgetriebenen Gleitplatte (30) und Ausrichteinheiten (80) so positioniert wird, dass eine beladene Plattform in Beförderungsrichtung von der Übergabestation zu dem Fahrzeug (10) beförderbar ist,
wobei eine beladene Plattform (50) von der Übergabestation (20) über die unbeladene Plattform (52) des Fahrzeugs (10) befördert wird,
wobei die unbeladene Plattform (52) zusammen mit der beladenen Plattform (50) von dem Fahrzeug (10) zu der Übergabestation befördert werden; und
wobei die beladene Plattform (50) zu dem Fahrzeug (10) befördert wird und die unbeladene Plattform (52) in der Übergabestation (20) verbleibt,
wobei die Übergabestation eine Bodenplatte (20) aufweist, auf der die Gleitplatte (30) gleitend bewegbar ist, und
wobei die Bodenplatte (20) auf dem Boden eines Gebäudes, insbesondere einer Lagerhalle, im Inneren des Gebäudes angeordnet ist.

8. Verfahren zum Entladen von Fahrzeugen,
wobei ein Fahrzeug (10) mit einer beladenen Plattform vor einer Übergabestation so positioniert wird, dass Plattformen (50) in Beförderungsrichtung von der Übergabestation zu dem Fahrzeug (10) und/oder von dem Fahrzeug (10) zu der Übergabestation beförderbar sind,
wobei die beladene Plattform von dem Fahrzeug (10) über eine unbeladene Plattform der Übergabestation befördert wird,
wobei die unbeladene Plattform zusammen mit der beladenen Plattform von der Übergabestation zu dem Fahrzeug (10) befördert werden;
wobei die beladene Plattform zu der Übergabestation befördert wird und die unbeladene Plattform in dem Fahrzeug (10) verbleibt, und
wobei die Übergabestation durch Verfahren quer zur Beförderungsrichtung mittels einer seilgetriebenen Gleitplatte (30) und Ausrichteinheiten 80 so positioniert wird, dass eine weitere beladene Plattform in Beförderungsrichtung (A) von der Übergabestation (20) zu dem Fahrzeug (10) beförderbar ist,
wobei die Übergabestation eine Bodenplatte (20) aufweist, auf der die Gleitplatte (30) gleitend bewegbar ist, und
wobei die Bodenplatte (20) auf dem Boden eines Gebäudes, insbesondere einer Lagerhalle, im Inneren des Gebäudes angeordnet ist.

## Claims

1. Logistics system for transferring a platform (50) in its conveying direction to a vehicle (10) and/or for taking over a platform (50) from a vehicle (10),
wherein the dimensions of the platform (50) are adjusted to those of the loading area of the vehicle (10),
wherein the logistics system comprises a transfer station for the platform (50) in order to take the platform (50) in conveying direction from the vehicle (10) or transfer it thereto,
wherein the transfer station comprises at least two mounts (100) on each of which a platform (50) can be placed and by which the platform (50) can be conveyed in conveying direction to the vehicle (10) and/or from the vehicle (10),
wherein the mounts (100) can mount the platforms (50) parallel to one another in conveying direction and
wherein the mounts (100) have a longitudinal advancing unit (60) in order to move a platform (50) in conveying direction to the vehicle (10) or from the vehicle (10),
**characterised in that**
the mounts (100) are arranged on a sliding plate (30) which can be moved by means of a cable drive (42) in a direction perpendicular to the conveying direction,
**in that** the transfer station comprises a base plate (20) on which the sliding plate (30) can be moved in a sliding manner, and
**in that** the base plate (20) is arranged on the floor of a building, in particular a warehouse, on the inside of the building.

2. Logistics system according to claim 1, **characterised in that** the cable drive comprises cable winches (42) by means of which the sliding plate (30) can be moved over on said gripping tension cable (40).

3. Logistics system according to claim 2, **characterised in that** the cable drive consists of cable winches (42) two of which are arranged at opposite ends of the base plate (20), wherein the surface of the base plate (20) corresponds essentially to the displacement area of the sliding plate (30).

4. Logistics system according to claim 3, **characterised in that** the four cable winches (42) are arranged essentially in the corner areas of the base plate (20).

5. Logistics system according to claim 3 or 4, **characterised in that** two opposite cable winches (42) are connected with one another via a tension cable (40), wherein the tension cable (40) is in engagement with the sliding plate (30) in between.

6. Transfer station for a logistics system for the transfer of a platform (50) in its conveying direction to a vehicle (10) and/or for taking over a platform (50) from a vehicle (10),
wherein the dimensions of the platform (50) are adjusted to those of the loading area of the vehicle (10),
wherein the transfer station comprises at least two mounts (100) on each of which a platform (50) can be placed and by which the platform (50) can be conveyed in conveying direction to the vehicle (10) and/or from the vehicle (10),
wherein the mounts (100) can mount the platforms (50) parallel to one another in conveying direction and
wherein the mounts (100) have a longitudinal advancing unit (60) in order to move a platform (50) in conveying direction to the vehicle (10) or from the vehicle (10),
**characterised in that**
the mounts (100) are arranged on a sliding plate (30) which can be moved by means of a cable drive (42) in a direction perpendicular to the conveying direction
**in that** the transfer station comprises a base plate (20) on which the sliding plate (30) can be moved in a sliding manner and
**in that** the base plate (20) is arranged on the floor of a building, in particular a warehouse, on the inside of the building.

7. Method for loading vehicles, wherein a vehicle (10) with an unloaded platform (52) is positioned ahead of a transfer station so that platforms (50) can be conveyed in conveying direction from the transfer station to the vehicle (10) and/or from the vehicle (10) to the transfer station,
wherein the transfer station is positioned during the movement perpendicular to the conveying direction by means of a cable-driven sliding plate (30) and aligning units (80) so that a loaded platform can be conveyed in conveying direction from the transfer station to the vehicle (10),
wherein a loaded platform (50) is conveyed from the transfer station (20) over the unloaded platform (52) of the vehicle (10),
wherein the unloaded platform (52) together with the loaded platform (50) are conveyed by the vehicle (10) to the transfer station and
wherein the loaded platform (50) is conveyed to the vehicle (10) and the unloaded platform (52) remains in the transfer station (20),
wherein the transfer station comprises a base plate (20) on which the sliding plate (30) can be moved in a sliding manner, and
wherein the base plate (20) is arranged on the floor of a building, in particular a warehouse, on the inside of the building.

8. Method for unloading vehicles,
wherein a vehicle (10) with a loaded platform is positioned ahead of a transfer station so that platforms (50) can be conveyed in conveying direction from the transfer station to the vehicle (10) and/or from the vehicle (10) to the transfer station,
wherein the loaded platform is conveyed by the vehicle (10) over an unloaded platform of the transfer station,
wherein the unloaded platform together with the loaded platform are conveyed from the transfer station to the vehicle (10);
wherein the loaded platform is conveyed to the transfer station and the unloaded platform remains in the vehicle (10) and
wherein the transfer station is positioned by moving perpendicular to the conveying direction by means of a cable-driven sliding plate (30) and aligning units (80) so that an additional loaded platform can be conveyed in conveying direction (A) from the transfer station (20) to the vehicle (10),
wherein the transfer station comprises a base plate (20) on which the sliding plate (30) can be moved in a sliding manner and
wherein the base plate (20) is arranged on the floor of a building, in particular a warehouse, on the inside of the building.

## Revendications

1. Système logistique pour transborder une plate-forme (50) dans la direction de transport de celle-ci sur un véhicule (10) et/ou pour réceptionner une plate-forme (50) provenant d'un véhicule (10),
dans lequel les dimensions de la plate-forme (50) sont adaptées à la surface de chargement du véhicule (10),
dans lequel le système logistique présente une station de transbordement pour la plate-forme (50) pour réceptionner la plate-forme (50) du véhicule (10) dans la direction de transport ou pour la transborder sur celui-ci,
dans lequel la station de transbordement présente au moins deux berceaux (100) sur lesquels on peut déposer respectivement une plate-forme (50) et d'où la plate-forme (50) peut être transportée dans la direction de transport vers le véhicule (10) et/ou depuis le véhicule (10),
dans lequel les berceaux (100) peuvent recevoir les plates-formes (50) dans la direction de transport en parallèle les unes aux autres, et
dans lequel les berceaux (100) possèdent une unité d'avance longitudinale (60) pour déplacer une plate-forme (50) dans la direction de transport vers le véhicule (10) ou depuis le véhicule (10),
**caractérisé en ce que**
les berceaux (100) sont disposés sur une plaque de glissement (30) qui est mobile au moyen d'un entraînement par câble (42) dans la direction transversale à la direction de transport,
**en ce que** la station de transbordement présente une plaque de base (20) sur laquelle la plaque de glissement (30) peut être déplacée par glissement, et
**en ce que** la plaque de base (20) est disposée sur le sol d'un bâtiment, en particulier d'un entrepôt, à l'intérieur du bâtiment.

2. Système logistique selon la revendication 1, **caractérisé en ce que**
l'entraînement par câble (42) présente des treuils à câble (42) au moyen desquels la plaque de glissement (30) peut être déplacée par l'intermédiaire de câbles tracteurs (40) attaquant au niveau de celle-ci.

3. Système logistique selon la revendication 2, **caractérisé en ce que**
l'entraînement par câble se compose de quatre treuils à câble (42) dont respectivement deux sont disposés aux extrémités opposées de la plaque de base (20), la surface de la plaque de base (20) correspondant substantiellement à la zone de déplacement de la plaque de glissement (30).

4. Système logistique selon la revendication 3, **caractérisé en ce que**
les quatre treuils à câble (42) sont disposés substantiellement dans les zones d'angle de la plaque de base (20).

5. Système logistique selon la revendication 3 ou 4, **caractérisé en ce que**
respectivement deux treuils à câble (42) opposés sont reliés ensemble par un câble tracteur (40), le câble tracteur (40) étant en prise avec la plaque de glissement (30) qui se trouve entre.

6. Station de transbordement pour un système logistique pour transborder une plate-forme (50) dans la direction de transport de celle-ci sur un véhicule (10) et/ou pour réceptionner une plate-forme (50) provenant d'un véhicule (10),
dans laquelle les dimensions de la plate-forme (50) sont adaptées à la surface de chargement du véhicule (10),
dans laquelle la station de transbordement présente au moins deux berceaux (100) sur lesquels on peut déposer respectivement une plate-forme (50) et d'où la plate-forme (50) peut être transportée dans la direction de transport vers le véhicule (10) et/ou depuis le véhicule (10),
dans laquelle les berceaux (100) peuvent réceptionner les plates-formes (50) dans la direction de transport en parallèle les unes aux autres, et
dans laquelle les berceaux (100) possèdent une unité d'avance longitudinale (60) pour déplacer une plate-forme (50) dans la direction de transport vers le véhicule (10) ou depuis le véhicule (10),
**caractérisée en ce que**
les berceaux (100) sont disposés sur une plaque de glissement (30) qui est mobile au moyen d'un entraînement par câble (42) dans la direction transversale à la direction de transport,
**en ce que** la station de transbordement présente une plaque de base (20) sur laquelle la plaque de glissement (30) peut être déplacée par glissement, et
**en ce que** la plaque de base (20) est disposée sur le sol d'un bâtiment, en particulier d'un entrepôt, à l'intérieur du bâtiment.

7. Procédé de chargement de véhicules,
dans lequel un véhicule (10) avec une plate-forme vide (52) est positionné devant une station de transbordement de telle sorte que des plates-formes (50) dans la direction de transport de la station de transbordement puissent être transportées vers le véhicule (10) et/ou depuis le véhicule (10) vers la station de transbordement,
dans lequel la station de transbordement est positionnée par un déplacement transversal à la direction de transport au moyen d'une plaque de glissement (30) entraînée par câble et d'unités d'alignement (80) de telle sorte qu'une plate-forme chargée puisse être transportée dans la direction de transport de la station de transbordement au véhicule (10),
dans lequel une plate-forme chargée (50) est transportée depuis la station de transbordement (20) par l'intermédiaire de la plate-forme vide (52) du véhicule (10),
dans lequel la plate-forme vide (52) est transportée du véhicule (10) à la station de transbordement en même temps que la plate-forme chargée (50), et
dans lequel la plate-forme chargée (50) est transportée vers le véhicule (10), et la plate-forme vide (52) reste à la station de transbordement (20),
dans lequel la station de transbordement présente une plaque de base (20) sur laquelle la plaque de glissement (30) peut être déplacée par glissement, et
dans lequel la plaque de base (20) est disposée sur le sol d'un bâtiment, en particulier d'un entrepôt, à l'intérieur du bâtiment.

8. Procédé de déchargement de véhicules,
dans lequel un véhicule (10) avec une plate-forme chargée est positionné devant une station de transbordement de telle sorte que des plates-formes (50) puissent être transportées dans la direction de transport de la station de transbordement au véhicule (10) et/ou du véhicule (10) à la station de transbordement,
dans lequel la plate-forme chargée est transportée depuis le véhicule (10) par l'intermédiaire d'une plate-forme vide de la station de transbordement,
dans lequel la plate-forme vide est transportée de la station de transbordement au véhicule (10) en même temps que la plate-forme chargée,
dans lequel la plate-forme chargée est transportée vers la station de transbordement et la plate-forme vide reste sur le véhicule (10), et
dans lequel la station de transbordement est positionnée par un déplacement transversal à la direction de transport au moyen d'une plaque de glissement (30) entraînée par câble et d'unités d'alignement 80 de telle sorte qu'une autre plate-forme chargée puisse être transportée dans la direction de transport (A) de la station de transbordement (20) au véhicule (10),
dans lequel la station de transbordement présente une plaque de base (20) sur laquelle la plaque de glissement (30) peut être déplacée par glissement, et
dans lequel la plaque de base (20) est disposée sur le sol d'un bâtiment, en particulier d'un entrepôt, à l'intérieur du bâtiment.
